# EUROPÄISCHE PATENTSCHRIFT

(11) **EP 0 716 585 B1**
(45) Veröffentlichungstag und Bekanntmachung des Hinweises auf die Patenterteilung: **05.03.1997**
(21) Anmeldenummer: 94926195.2
(22) Anmeldetag: 13.08.1994
(51) Int. Cl.: A61C 15/00, A46B 3/18

(54) **REINIGUNGSGERÄT**
CLEANING DEVICE
APPAREIL DE NETTOYAGE

(30) Priorität: 31.08.1993 DE 9313034 U
(43) Veröffentlichungstag der Anmeldung: 19.06.1996
(73) Patentinhaber: GEORG KARL GEKA-BRUSH GMBH, D-91564 Bechhofen-Waizendorf (DE)
(72) Erfinder: DUMLER, Norbert, D-91522 Ansbach (DE); FELLNER, Bernd, D-91522 Ansbach (DE)
(74) Vertreter: Schneck, Herbert, Dipl.-Phys., Dr.
(86) Internationale Anmeldenummer: EP9402713
(87) Internationale Veröffentlichungsnummer: WO9506444

(56) Entgegenhaltungen:
- WO-A-86/02532
- CH-A- 667 382
- DE-U- 9 111 499
- DE-U- 9 202 508
- DE-U- 9 206 967
- US-A- 5 123 841

## Beschreibung

Die Erfindung richtet sich auf ein Reinigungsgerät, insbesondere für den Interdentalbereich, umfassend zwei verdrillte, drahtartige Abschnitte.

Derartige Reinigungsgeräte, wie sie aus DE-U-9 202 508 bekannt sind, sind als Interdental-Bürstchen, wenn also zwischen die verdrillten Drahtabschnitte Borsten eingesetzt sind, an sich bekannt. Bei den bekannten derartigen Reinigungsgeräten wird im wesentlichen die Reinigungswirkung der eingesetzten Borsten herangezogen, während die verdrillten Drahtabschnitte lediglich als Borstenhalter dienen.

Daneben sind Reinigungsgeräte für den Interdentalbereich bekannt, welche zahnstocherartig ausgebildet sind, d.h. aus einem in der Regel spitz zulaufenden, dornartigen Teil aus Holz, Kunststoff oder Metall bestehen, wobei es auch bereits bekannt ist, derartige Kunststoffteile oberflächenseitig durch Beflocken aufzurauhen oder mit Fasern zu versehen.

Hiervon ausgehend liegt der Erfindung die Aufgabe zugrunde, ein derartiges Reinigungsgerät so auszugestalten, daß einerseits die Realisierung neuartiger Reinigungstechniken möglich wird, und daß andererseits auch gleichzeitig mit der Reinigung Pflege- und Reinigungsmittel appliziert werden können.

Diese Aufgabe wird erfindungsgemäß dadurch gelöst, daß die drahtartigen Abschnitte so verdrillt sind, daß an dem Reinigungsbereich des Reinigungsgerätes wenigstens eine freie Schlaufe bzw. Öse ausgebildet wird.

Eine sich dementsprechend von der langgestreckten Grundkonfiguration wegerstreckende Öse oder Schlaufe kann einerseits als eigentliches Reinigungs- und Pflegegerät dienen und andererseits beim Eintauchen in eine Flüssigkeit oder Paste ein derartiges Medium aufgrund der Oberflächenspannung im Inneren der Schlaufe festhalten, so daß es aus einem Vorratsbehälter entnommen wird, wobei durch den Kontakt mit dem Zahn bzw. Zahnfleisch dann die Flüssigkeit wieder abgegeben wird.

Insbesondere kann vorgesehen sein, daß die drahtartigen Abschnitte durch einen U-förmig gebogenen Bügel gebildet sind, wobei im Bereich des U-Bodens eine Öse bzw. Schlaufe ausgebildet ist. Diese Öse oder Schlaufe ist dementsprechend am vorderen Ende des Geräts ausgebildet und eignet sich in besonderer Weise aufgrund ihrer exponierten Position zur Zahnbehandlung.

Dabei kann insbesondere vorgesehen sein, daß die endseitige Schlaufe oder Öse dreieckförmig oder rautenförmig geformt ist.

Die drahtartigen Abschnitte können vorteilhafterweise aus wenigstens einer Kunststoff-Faser bestehen, d.h. es ist nicht notwendig, daß sie in an sich bekannter Weise tatsächlich aus Draht oder aus einem mit Kunststoff überzogenen Draht bestehen, da Kunststoff-Fasern verfügbar sind, die - gegebenenfalls mit entsprechenden Füllstoffen - ein drahtartiges Verhalten aufweisen, d.h. nach dem Verdrillen oder Rückstelltendenz in dieser Position verbleiben.

In weiterer Ausgestaltung der Erfindung kann vorgesehen sein, daß die drahtartigen Abschnitte unter Ausbildung einer sich über einen wesentlichen Teil der Länge erstreckende Schlaufe gebildet sind und eine Verdrillung nur an dem einen Endbereich vorgesehen ist. Eine solche Konfiguration weist vorteilhafterweise in dem Bereich des verdrillten Endes ein Griffteil bzw. ein Halteteil zum Einsetzen in ein rotierendes bzw. oszillierendes Gerät auf. Beispielsweise kann auf diese Weise ein Reinigungsgerät in Verbindung mit einem elektrischen Antrieb, wie er von elektrischen Zahnbürsten bekannt ist, realisiert werden.

Weiterhin kann ein erfindungsgemäßes Reinigungsgerät unter Ausbildung einer bürstenartigen Konfiguration so ausgestaltet werden, daß zwischen die verdrillten drahtartigen Abschnitte radial abstehende Fasern bzw. Faserbüschel eingesetzt sind. Dementsprechend kann ein solches Gerät auch als herkömmliches Bürstchen, insbesondere Interdentalbürstchen, verwendet werden.

Die radial abstehenden Fasern können abrasive Zusätze, wie Siliziumkarbid oder Aluminiumoxid, enthalten um die Reinigungswirkung hierdurch zu erhöhen.

Nachfolgend wird die Erfindung anhand bevorzugter Ausführungsbeispiele in Verbindung mit der Zeichnung näher erläutert. Dabei zeigen:
- Fig. 1: eine bürstenartige Konfiguration,
- Fig. 2: die Ausgestaltung nach Fig. 1 vor dem Verdrillen der Drahtabschnitte,
- Fig. 3: ein Ausführungsbeispiel für die Ausgestaltung des Spitzenbereiches,
- Fig. 4: ein Ausführungsbeispiel für die Ausbildung von Schlaufen im Mittelbereich und
- Fig. 5: ein Ausführungsbeispiel in Form eines Einsatzes für ein elektromotorisch angetriebenes Gerät.

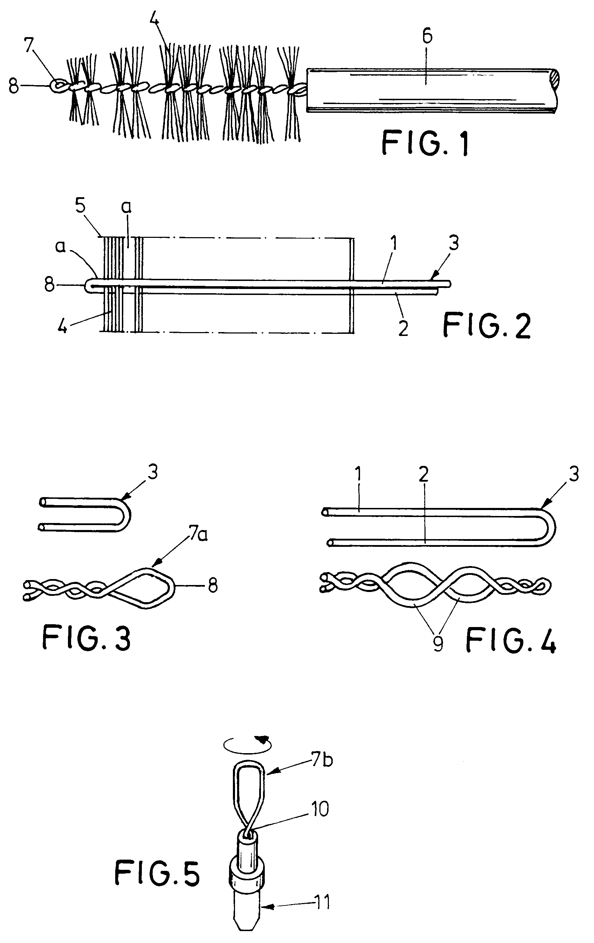

Bei der Ausführungsform gemäß Fig. 1 und 2 sind zwei drahtartige Abschnitte 1, 2 bestehend aus einer Kunststoff-Faser 3 U-förmig gebogen. Borsten 4 sind unter Ausbildung einer Hüllkurve 5 zwischen die drahtartigen Abschnitte 1, 2 eingesetzt, so daß sie nach dem Verdrillen derselben, wie in Fig. 1 dargestellt, als Borsten-Büschel radial abstehen. An den freien Enden kann ein Griffteil 6 vorgesehen sein.

Zwischen den einzelnen Borsten 4 sind Bereiche a vorgesehen, welche nicht mit Borsten besetzt sind. Das Verdrillen der Abschnitte 1, 2 erfolgt so, daß eine Schlaufe 7 am freien äußeren Ende 8 entsprechend dem U-Boden und jeweils dort entsteht, wo keine Borsten vorgesehen sind, also in den borstenfreien Bereichen a.

Durch eine solche Ausgestaltung kann ein derartiges Bürstchen, beispielsweise als Interdentalbürstchen, so eingesetzt werden, daß die Schlaufe 7 am freien Ende zur Behandlung der Zähne und Zahnzwischenräume eingesetzt wird, wobei beim Eintauchen in eine Reinigungsflüssigkeit diese aufgrund der Oberflächenspannung mitgenommen und im Zahnbereich appliziert wird.

Fig. 3 zeigt eine bevorzugte, im wesentlichen rautenartige Ausgestaltung der Schlaufe 7a am freien Ende 8.

Fig. 4 zeigt Schlaufen bzw. Ösen 9, die im Mittelbereich der Abschnitte 1, 2 ausgebildet sind.

Bei der Ausführungsform nach Fig. 5 ist lediglich eine große Schlaufe 7b vorgesehen, wobei die drahtartigen Abschnitte 1, 2 nur im Bereich des inneren Endes 10 verdrillt und dort in einen lediglich schematisch dargestellten Halter 11 eingesetzt sind, der in ein elektromotorisch angetriebenes Gerät einsetzbar ist.

## Patentansprüche

1. Reinigungsgerät, insbesondere für den Interdentalbereich, umfassend zwei verdrillte, drahtartige Abschnitte, dadurch gekennzeichnet, daß die drahtartigen Abschnitte (1, 2) so verdrillt sind, daß an dem Reinigungsbereich des Reinigungsgerätes wenigstens eine freie Schlaufe bzw. Öse (9) ausgebildet wird.

2. Reinigungsgerät nach Anspruch 1, dadurch gekennzeichnet, daß die drahtartigen Abschnitte (1, 2) durch einen U-förmig gebogenen Bügel gebildet sind, wobei im Bereich des U-Bodens eine Öse bzw. Schlaufe (9) ausgebildet ist.

3. Reinigungsgerät nach Anspruch 1, dadurch gekennzeichnet, daß die endseitige Schlaufe oder Öse (9) dreieckförmig oder rautenförmig geformt ist.

4. Reinigungsgerät nach Anspruch 1, dadurch gekennzeichnet, daß die drahtartigen Abschnitte (1, 2) aus wenigstens einer Kunststoff-Faser (3) bestehen.

5. Reinigungsgerät nach Anspruch 1, dadurch gekennzeichnet, daß die drahtartigen Abschnitte (1, 2) unter Ausbildung einer sich über einen wesentlichen Teil der Länge erstreckenden Schlaufe gebildet sind und eine Verdrillung nur an dem einen Endbereich vorgesehen ist.

6. Reinigungsgerät nach Anspruch 5, dadurch gekennzeichnet, daß in dem Bereich des verdrillten Endes ein Griffteil bzw. ein Halteteil zum Einsetzen in ein rotierendes bzw. oszillierendes Gerät vorgesehen ist.

7. Reinigungsgerät nach Anspruch 1, dadurch gekennzeichnet, daß unter Ausbildung einer bürstenartigen Konfiguration zwischen die verdrillten drahtartigen Abschnitte (1, 2) radial abstehende Fasern bzw. Faserbüschel eingesetzt sind.

8. Reinigungsgerät nach Anspruch 7, dadurch gekennzeichnet, daß die radial abstehenden Fasern abrasive Zusätze, wie Siliziumkarbid oder Aluminiumoxid, enthalten.

## Claims

1. A cleaning device, in particular for the interdental area, comprising two twisted, wire-type sections, characterized in that the wire-type sections (1, 2) are twisted in such a way that at least one free loop or eye (9) is formed on the cleaning portion of the cleaning device.

2. A cleaning device according to claim 1, characterized in that the wire-type sections (1, 2) are formed by a bow bent in the shape of a U, a loop or eye (9) being formed in the vicinity of the bight of the U.

3. A cleaning device according to claim 1, characterized in that the loop or eye (9) at the extreme end is triangular or rhomboidal.

4. A cleaning device according to claim 1, characterized in that the wire-type sections (1, 2) consist of at least one plastic fiber (3).

5. A cleaning device according to claim 1, characterized in that the wire-type sections (1, 2) form a loop over a substantial part of their length, twisting only being provided at one end portion.

6. A cleaning device according to claim 5, characterized in that in the vicinity of the twisted end, a handle or holder member is provided for insertion in a rotating or oscillating appliance.

7. A cleaning device according to claim 1, characterized in that radially extending fibers or bunches of fibers are inserted in between the twisted wire-type sections (1, 2), forming a brush-type configuration.

8. A cleaning device according to claim 7, characterized in that the radially extending fibers contain abrasive additives such as silicon carbide or aluminum oxide.

## Revendications

1. Outil de nettoyage, notamment pour la zone interdentaire, comprenant deux tronçons, qui sont du type fils métalliques et qui sont torsadés, caractérisé en ce que les tronçons (1, 2) du type fils métalliques sont torsadés de telle sorte qu'il se forme au moins une boucle ou un oeillet (9) ouvert dans la zone de nettoyage de l'outil de nettoyage.

2. Outil de nettoyage selon la revendication 1, caractérisé en ce que les tronçons (1, 2) du type fils métalliques sont formés par une pièce recourbée en forme de U, un oeillet ou une boucle (9) se formant dans la zone de la base du U.

3. Outil de nettoyage selon la revendication 1, caractérisé en ce que la boucle ou l'oeillet (9) de l'extrémité a la forme d'un triangle ou d'un losange.

4. Outil de nettoyage selon la revendication 1, caractérisé en ce que les tronçons (1, 2) du type fils métalliques sont constitués d'au moins une fibre (3) en matière plastique.

5. Outil de nettoyage selon la revendication 1, caractérisé en ce que les tronçons (1, 2) du type fils métalliques sont formés de manière à constituer une boucle s'étendant sur une grande partie de la longueur et en ce qu'une torsion est prévue seulement à une extrémité.

6. Outil de nettoyage selon la revendication 5, caractérisé en ce qu'un élément de préhension ou de tenue destiné à être placé dans un appareil tournant ou oscillant est prévu dans la zone de l'extrémité torsadée.

7. Outil de nettoyage selon la revendication 1, caractérisé en ce que des fibres ou des faisceaux de fibres s'éloignant radialement sont placés entre les tronçons (1, 2) du type fils métalliques, torsadés, de manière à construire une sorte de brosse.

8. Outil de nettoyage selon la revendication 7, caractérisé en ce que les fibres s'éloignant radialement contiennent des produits ajoutés abrasifs tels que du carbure de silicium ou de l'oxyde d'aluminium.
